Europäisches Patentamt

European Patent Office

Office européen des brevets

(19)

(11) Publication number: 0 275 717

A1

## (12) EUROPEAN PATENT APPLICATION

(21) Application number: 87311523.2

(22) Date of filing: 30.12.87

(51) Int. Cl.4: **A23L 1/16** , A23L 3/34 , A23B 7/06

(30) Priority: 31.12.86 US 947997

(43) Date of publication of application:
27.07.88 Bulletin 88/30

(84) Designated Contracting States:
AT BE CH DE ES FR GB GR IT LI LU NL SE

(71) Applicant: Del Monte Corporation
One Market Plaza P.O. Box 3575
San Francisco California 94119-3575(US)

(72) Inventor: Holmes, Diane
1372 Cornwall Ct. Walnut Creek
California 94591(US)
Inventor: Forsman, Cleeste Marie
1309 Waterfall Way
Concord California 94521(US)

(74) Representative: Crisp, David Norman et al
D. YOUNG & CO. 10 Staple Inn
London, WC1V 7RD(GB)

(54) Acidified pasta salad.

(57) A ready-to-eat pasta product, and process for making, which is storable for extended periods of time is disclosed. The pasta product is formed by blanching dry pasta in a heated acidic aqueous solution, rinsing the blanched pasta, and then dipping the pasta in a cooler acidic aqueous solution. The pasta product is then stored in a sauce such that the equilibrated pH is between about 3.8 to 4.3.

EP 0 275 717 A1

## ACIDIFIED PASTA SALAD

The present invention is directed to a process for making a storage-stable pasta product and such a product.

The storage of food products has been the focus of many studies and much research in recent years. Consumer demands for ready to eat and easy to prepare meals has increased, making storage stable food products highly desirable. While taste and consumability are of utmost importance, the longer and easier that a food product can be stored, the more desirable it is in the eyes of many modern customers. Longer storage life also provides the advantage of causing less waste for consumers. To the extent that refrigeration is not necessary during manufacturing, shipping, and storage prior to purchasing by the consumer, the overall process is much more convenient and inexpensive than prior art processes which require refrigeration.

The prior art discloses various methods for preserving food products. Among the various methods previously employed for preserving edible food products is the treatment of the food products with acid solutions. The acid treatment processes of the prior art suffer several disadvantages such as requiring the addition of fungistatic agents and auxiliary agents in order to produce products with extended shelf life. Some prior art processes require excessive cooking which changes the organoleptic properties of the original food product. Other prior art processes cause the loss of the original organoleptic properties of the food product or result in products with highly acidic flavors. Furthermore, many of the prior processes are not well suited for modern high-volume manufacturing.

Included among known processes for enhancing the preservability of food products are Saitoh, et al. U.S. Patent No. 4,552,772 which teaches a process for preparing boiled noodles which can be stored for periods of 6 months whereby the noodles are boiled, water-washed, and then immersed in an aqueous solution (containing citric acid and/or lactic acid, table salt, and sodium glutamate) followed by packaging and heat sterilization. This process purports to reduce the pH of the noodles to lower than about 3.9-4.3 while concealing the acid taste with the table salt.

Brehmn, U.S. Patent No. 2,434,388, teaches a process for canning various foods including potatoes and macaroni. Brehm's process includes immersing and cooking the food product in an aqueous acid solution.

Seltzer, U.S. Patent No. 4,469,711, discloses a quick-cooking, storage-stable pasta product prepared from flour, water, a carbonate and an acidic leavening salt. It is believed that a reaction between the carbonate and the acidic leavening salt causes the formation of vacuoles which facilitate rapid water penetration during rehydration.

Seltzer, et al., U.S. Patent No. 4,495,214, discloses another quick cooking pasta prepared from flour, water, a carbonate and an acidic leavening salt, with the addition of an interrupter. The addition of the interrupter yields a softer, less chewy pasta product.

Takekoshi, U.S. Patent No. 4,414,235, discloses a process for making instant macaroni in which an egg white, a yam and a carbonate are kneaded into dough with water. After allowing that dough to age, it is further kneaded with an aqueous organic acid solution. Phosphoric acid is listed as one of the edible acids useful in the second kneading.

Tsen, et al., U.S. Patent No. 4,466,985, discloses a pasta composition suitable for canning which retains its organoleptic properties whereby the composition is formed from a wheat-derived material, water, soy protein and a surfactant. In one test disclosed by Tsen, the pasta was canned and retorted in a tomato paste having a pH of 4.2, yielding superior results.

Harada, et al., U.S. Patent No. 4,540,590, discloses a process for producing a pasta which is rehydratable in four minutes. Harada discloses one pasta dough containing up to 0.3 wt% of an organic acid.

Akerboom, et al., U.S. Patent No. 3,038,810, teaches compositions and processes for stabilizing food flavor and inhibiting microbiological growth in potatoes. In accordance with Ex. #1 of Akerboom's teaching, potatoes are first cooked in a boiling aqueous solution containing an acidifying agent, a fungistatic agent, an auxiliary additive and salt. The potatoes are then cooled to 90°F in a second acidic aqueous solution. Phosphoric acid is disclosed as a desirable, but not the preferred, acidifying agent. Akerboom states that the potato must be cooked to a point where starch gelatinization and protein denaturation occurs with attendant rupture of cell walls before effective migration of the preserving agents into the potato can take place.

Duggan, U.S. Patent No. 3,231,395, teaches a process for preparing frozen mushrooms wherein mushrooms are washed, dipped in a solution containing carboxylic acid, salt and sulphur dioxide, blanched with hot water, cooled, and again dipped in a solution containing carboxylic acid, salt and sulphur dioxide, rinsed and then frozen.

Keenan, U.S. Patent No. 2,676,889, discloses a process for producing uniform potato chipe which retain freshness and crispness for long periods. Keenan's process includes rinsing the potato chips in solution containing citric acid with a pH from 2.99 to 6.99.

Wilbur, U.S. Patent No. 2,187,718, teaches a method of canning cooked rice which comprises cooking rice in an acid solution or, alternatively, boiling the rice in water and then mixing the rice with an acid ingredient, prior to canning. The canned rice is then sterilized at a temperature not exceeding 212°F.

Makower, U.S. Patent No. 2,890,120, discloses a method for inactivating the enzymes in edible plant material. Makower's process comprises contacting the plant tissue with an aqueous solution containing an acid, a volatile oxygenated organic solvent, and a wetting agent. Phosphoric acid is disclosed as one possible acid alternative and potatoes are listed as one type of edible plant to which this process can be applied.

The products and process disclosed in these patents do not enjoy the advantages of the present invention.

The present invention is directed to a method of creating a storage stable pasta product which retains the original organoleptic properties of the food product.

In various embodiments of the invention we have now found it possible to provide:
a high-starch pasta product which has an extended shelf life at room temperature;
a pasta product which retains its original organoleptic properties even after processing and extended periods of storage;
a product which is microbiologically stable;
a storage stable pasta product which does not require the addition of conventional preservatives, such as benzoate or sorbate, in order to be safely stored at room temperature for extended periods;
a storage stable pasta product which results in less spoilage and waste for the consumer; and
a storage stable pasta product which does not require refrigeration during storage.

Applicant's invention is generally directed to a storage stable pasta product which retains its original flavor and organoleptic properties after extended periods of storage at room temperature, and a process for making such a product. Applicants have discovered that by blanching dry pasta in a heated acidified solution, then dipping the blanched pasta into a cooled acidified aqueous solution, and then storing the treated pasta in a solution sauce having an equilibrated pH of about 3.8-4.3, the resulting pasta resists bacterial growth while retaining the favorable organoleptic properties of the original pasta for extended periods.

The solution or sauce may have a pH substantially lower than the pH of the blanched and dipped pasta e.g. a sauce with a pH as low as 2.0 might be employed. Since the pH of the pasta and the pH of the sauce equilibrate, care is taken to select a sauce having a pH which will make the pH of the equilibrated pasta and sauce mixture between about 3.8-4.3.

Applicants' invention is conveniently directed to a shelf stable pasta product and the process for preparing that product. As used herein the term "pasta", for example, includes any of the various forms of macaroni and the like formed from a dough by adding water to products known in the art such as wheat flours, farinas, or semolina of durum, kneading the dough, and then molding, e.g. by extrusion molding or punch molding, the dough prior to drying.

In accordance with the process of the present invention, dry pasta is blanched with an acidified aqueous solution having a pH of between about 2.0 and 2.5 at a temperature ranging from between about 190°F and 212°F for between about 6.5 and 8.5 minutes and then drained. It will be recognized by those skilled in the art that the desired results may be obtained by cooking for shorter periods at higher temperatures. A mixture of vegetables and spices may be added to the pasta at this point. The pasta and vegetable mixture is then dipped into a cooler acidified aqueous solution having a pH between about 1.8 and 2.5, at a temperature of below about 70°F for approximately 9-12 minutes. The mixture is then drained and stored in a solution sauce such that the equilibrated mixture of pasta and sauce has a pH of between about 3.8 and 4.3, preferably about 4.1.

Among the available edible acids that can be utilized in practicing the present invention are phosphoric acid, citric acid, lactic acid, acetic acid, vinegar and mixtures thereof. Under the preferred embodiment of the present invention phosphoric acid or lactic acid are utilized since it has been found that other edible acids leave undesirable flavors not experienced with phosphoric acid or lactic acid.

In accordance with the most preferred embodiment of the present invention, dry pasta is treated in a heated aqueous acidic solution under the conditions stated above. The blanched pasta and vegetable mixture is then placed into the above-noted acidified aqueous cooling solution. After proper cooling and draining, oil is sprayed onto the pasta. A mixture of sliced vegetables is preferably then added to the pasta, though it is possible to achieve the desired results by adding the vegetables to the pasta prior to the cooling solution step. The pasta and vegetable mixture is then added to a suitable machine. The mixture is deposited into a can containing a small amount of oil and the can is then filled with a sauce containing a variety of spices. The sauce composition is adjusted such that the resulting mixture of pasta, vegetables, and sauce has an equilibrated pH of between about 3.8 and 4.3. The can is sealed and subjected to a rotary cook in a conventional Orbitort for about 6 minutes at 240°F and then cooled to an internal temperature of about 100°F. The resulting can is then ready for shipping and storage.

The vegetable mixture can contain any combination of vegetables such as onions, peppers, olives, celery and carrots. The sauce may contain spices and other ingredients as are known in the art including, but not limited to, vinegar, sugar, salt, gums, mustard flour, grated cheese, lecithin, phosphoric acid, flavor, italian seasoning, CaCl$_2$ and other herbs, flavors and spices.

Alternative sauces within the scope of the present invention may also be utilized. Among the alternatives are a creamy parmesan sauce which comprises a creamy cheese sauce having the sharp flavor profile of Parmesan, Romano and other cheeses, (perhaps with the addition of diced red bell pepper for color or appeal); a pesto sauce comprising a herb/vegetable sauce flavored with basil, garlic and grated cheese; a traditional tomato sauce having chunks of tomato, onion, celery, black olives, mushrooms and other herbs, flavors and spices; and fruit sauces such as pineapple, orange, vanilla, peach, apricot or lemon which may include chunks of whole fruit.

The important aspect of the sauce is that its ingredients are chosen so as not to change the desired equilibrated pH of the mixture in the completed product.

As used herein, "canning" is meant to include the packaging of the final products in any gas impermeable container such as cans, jars or retort pouches/trays.

EXAMPLE

The following example is illustrative of the present invention practiced on a commercial basis. A first heating blancher is filled with 650 gallons of water and an amount of phosphoric acid sufficient to bring the pH to about 2.0-2.1 at 25°C. (It has been found that by adding about 8 pounds, 10 ounces of an 85% phosphoric acid solution to the 650 gallons of water that the desired pH range is obtained. It is nonetheless preferable to test the blanching solution approximately every 15 minutes to be sure that the desired pH range is maintained.) The aqueous acidic solution is then heated to about 202-208°F. To a second cooling blancher is added about 630 gallons of water and a phosphoric acid solution sufficient to bring the total acidic aqueous solution pH to between about 1.9-2.0 at 25°C. (The addition of 15 pounds 11.9 ounces of an 85% phosphoric acid solution has been found sufficient, though the blanching solution should be tested to ensure the desired pH range.) This second blancher is maintained at about 60°F or lower.

The process is started by blanching about 300 pounds of dry pasta with the heated blanching solution for about 6 1/2 minutes and then briefly draining the pasta.

The blanched pasta is then added to about 390 pounds of a vegetable and water mixture. (The specific mixture can comprise a wide variety of vegetables but should be chosen so that the final equilibrated pH is in the desired range of about 3.8-4.3.). The pasta and vegetable mixture is then subjected to the cooling blanch for about 8 to 12 minutes and briefly drained. Samples should be taken of the blanched, cooled pasta to ensure a pH of about 4.0. The cooled pasta and vegetable mixture is then sprayed with an oil such as vegetable 10 oil (58 pounds) and placed in a filler machine.

About 2,050 pounds of a sauce having a preferred pH of about 3.7 is prepared. The sauce is placed in a briner and heated to about 125°F.

The entire product is packaged by depositing 4.1 ounces of vegetable oil in the bottom of a #10 can. The pasta and vegetable filling from the filler machine was then added (46 ounces) followed by 64.41 ounces of the aforementioned sauce which has a pH of about 3.7 and was heated to about 145°F. The can was then heated in an Orbitort rotary cook at 240°F for about 6 minutes and then cooled to a core temperature of about 110°F over a period of about 35 minutes. The cans were then ready for subsequent packaging and shipping.

It is estimated that after extended periods of time of up to at least about 24 months the canned product of the present invention will exhibit the same flavor and organoleptic properties as freshly cooked pasta.

Unlike stored cooked pastas of the prior art which require refrigeration, the present food product does not require refrigeration if properly canned. The products of this invention are highly resistant to retrogradation which is a change in the starch chemistry which causes pasta to become mealy in texture.

Variations within the scope of the present invention will be apparent to those skilled in the art in light of the present disclosure. The scope of the present invention is not limited by the present specification but is defined by the following claims.

## Claims

1. A process for making a storage-stable pasta product comprising a steps of blanching pasta in a first heated acidic aqueous solution, draining the blanched pasta, treating the pasta in a second acidic aqueous solution which is at a lower temperature than said first heated acidic aqueous solution and mixing the pasta with a sauce to obtain an equilibrated pH of from about 3.8 to 4.3.

2. A process for making a storage-stable pasta product as in Claim 1 wherein said first and/or second acidic aqueous solutions comprise phosphoric acid, citric acid, lactic acid, acetic acid, vinegar or mixtures thereof.

3. A process of claim 1 or claim 2 wherein said first heated acid aqueous solution has a pH of from about 2.0 to 2.5 at 25°C.

4. A process of any preceding claim wherein said first heated acidic aqueous solution is maintained at a temperature of from about 202°F to 208°F.

5. A process of any preceding claim wherein said first heated acidic aqueous solution comprises phosphoric acid or lactic acid.

6. A process of any preceding claim wherein said second acidic aqueous solution has a pH of from about 1.8 to 2.5 at 25°C.

7. A process of any preceding claim wherein said second acidic aqueous solution is maintained at a temperature of below about 60°F.

8. A process of any preceding claim wherein said pasta product is combined with other food products to form a ready-to-eat pasta salad having an equilibrated pH of from about 3.8 and 4.3.

9. A process of claim 8 wherein said pasta product is combined with other food products to form a ready-to-eat pasta salad having an equilibrated pH of about 4.1.

10. A process for making a storage-stable product comprising the steps of blanching pasta in a first acidic aqueous solution having a pH of from about 2.0 to 2.1 and which is maintained at a temperature of from about 202° to 208°F, draining the blanched pasta, treating the pasta with a second acidic aqueous solution having a pH from about 1.9 to 2.0 and which is maintained at a temperature of below about 60°F, and mixing the pasta with a sauce such that the equilibrated pH of the pasta and the sauce is from about 3.8 and 4.3.

11. A process for making a storage-stable pasta product as in Claim 10 wherein said first and/or second acidic aqueous solutions comprise phosphoric acid, citric acid, lactic acid, acetic acid, vinegar or mixtures thereof.

12. A process for making a storage-stable pasta product as in Claim 10 wherein said first heated acidic aqueous solution comprises phosphoric acid or lactic acid.

13. A process of any of claims 10-12 wherein said pasta product is combined with other food products to form a ready-to-eat pasta salad having an equilibrated pH of from about 3.8 and 4.3.

14. A storage-stable pasta salad comprising an acid treated pasta and vegetable mixture wherein said pasta and vegetable mixture is stored in a sauce such that the equilibrated pH of said mixture and said sauce is from about 3.8 and 4.3.

15. A storage-stable pasta salad as in Claim 14 wherein the equilibrated pH of said mixture and said sauce is about 4.1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | US-A-4 552 772 (SAITOH et al.)<br>* example 1, claims 1, 2 *<br>--- | 1,2 | A 23 L 1/16<br>A 23 L 3/34<br>A 23 B 7/06 |
| Y | US-A-4 597 976 (DOSTER et al.)<br>* claim 1, column 6, example 1 *<br>--- | 1,2 | |
| A | PATENT ABSTRACTS OF JAPAN, vol. 6, no. 102 (C-107)[980], 11th June 1982; & JP - A - 57 33559 (YOSHIKO TAKEKOSHI) 23-02-1982<br>--- | 1,2 | |
| A | PATENT ABSTRACTS OF JAPAN, vol. 7, no. 56 (C-155)[1201], 8th March 1983; & JP - A - 57 206 350 (MAMAA MAKARONI) 17-12-1982<br>----- | 1,2 | |

TECHNICAL FIELDS SEARCHED (Int. Cl.4)

A 23 L 1/00
A 23 L 3/00
A 23 B 7/00

The present search report has been drawn up for all claims

| Place of search | Date of completion of the search | Examiner |
|---|---|---|
| BERLIN | 22-03-1988 | SCHULTZE D |